# EUROPÄISCHE PATENTANMELDUNG

(11) **EP 1 270 996 A1**
(43) Veröffentlichungstag der Anmeldung: **02.01.2003**
(21) Anmeldenummer: 01115260.0
(22) Anmeldetag: 23.06.2001
(51) Int. Cl.: F16H 3/089

(54) **Zahnradwechselgetriebe**

(71) Anmelder: Ford Global Technologies, Inc., A subsidiary of Ford Motor Company, Dearborn, Michigan 48126 (US)
(72) Erfinder: Bernhardt, Udo, 50259 Pulheim (DE); Adams, Thomas, 50733 Köln (DE); Doernenburg, Henning, 50733 Köln (DE); Mueller, Erik, 40597 Düsseldorf (DE); Luiken, Andreas, 50737 Köln (DE)
(74) Vertreter: Drömer, Hans-Carsten, Dipl.-Ing.

(57) **Zusammenfassung**

Die Erfindung betrifft ein Zahnradwechselgetriebe für Kraftfahrzeuge, mit einer Eingangswelle (1) und einer parallel dazu angeordneten Ausgangswelle (2), mit mehreren, auf beiden Wellen angeordneten Zahnradpaaren, bestehend aus jeweils einem Festrad und einem Losrad, die miteinander im Eingriff stehen und von denen das Festrad mit der zugeordneten Welle drehfest verbunden ist und das Losrad auf der zugeordneten Welle frei drehbar gelagert ist, wobei die Losräder mittels Schaltkupplungen mit den zugeordneten Wellen drehfest verbindbar sind, und wobei die Ausgangswelle (2) ein festes Abtriebsritzel (5) aufweist, das mit einem Antriebszahnrad (6) eines Differentialgetriebes (7) im Eingriff steht, und mit einer Rückwartsgangeinrichtung, die durch eine Zwischenradanordnung mit einer zur Ausgangswelle (2) und Eingangswelle (1) parallelen Rückwärtsgangachse (4) gebildet wird, auf der zwei Rückwärtsganglosräder (25, 27) lose drehbar angeordnet sind, wobei das erste Rückwärtsganglosrad (25) mit einem Zahnrad auf der Eingangswelle (1) und das zweite Rückwärtsganglosrad (27) mit einem Zahnrad auf der Ausgangswelle (2) kämmt, und wobei die beiden Rückwärtsganglosräder (25, 27) gegeneinander frei drehbar sind und durch eine Schaltkupplung (26) miteinander drehfest verbindbar sind. Es ist dadurch gekennzeichnet, daß das zweite Rückwärtsganglosrad (27) mit einem auf der Ausgangswelle (2) drehfest, direkt neben dem Abtriebsritzel (5) angeordneten Rückwärtsgangfestrad (28) im Eingriff steht. Durch Abstimmung dieser beiden Zahnräder kann ein beliebiges Übersetzungsverhältnis für den Rückwärtsgang hergestellt werden, was vor allem bei Verwendung des Getriebes in verschiedenen Fahrzeugen eine einfache Anpassung der Rückwärtsgangübersetzung ermöglicht.

## Beschreibung

Die Erfindung bezieht sich auf ein Zahnradwechselgetriebe für Kraftfahrzeuge gemäß dem Oberbegriff des Anspruchs 1.

Aus der DE 3320494 ist ein Zahnradwechselgetriebe gemäß dem Oberbegriff des Anspruches 1 bekannt. Dabei kämmt ein Rückwärtsganglosrad mit einem Losrad auf der Eingangswelle und ein weiteres Rückwärtsganglosrad mit einem Losrad auf der Ausgangswelle, wobei die beiden Losräder jeweils mit den entsprechenden Festrädern auf der jeweils anderen Welle in ständiger getrieblicher Verbindung stehen. Der Rückwärtsgang wird geschaltet, indem die beiden Rückwärtsganglosräder miteinander gekuppelt werden. Als nachteilig erweist sich hier die Kopplung der Rückwärtsgangübersetzung an zwei Vorwärtsgangstufen. Die Änderung der Rückwärtsgangübersetzung bei Anpassung des Getriebes an verschiedene Fahrzeuge ist nur bei grundlegender Änderung der Rückwärtsganglosräder und Lage der Rückwärtsgangachse im Getriebegehäuse möglich. Weiterhin neigt eine solche Anordnung der Rückwärtsgangzahnräder bei eingelegtem Vorwärtsgang zum Rasseln, da ein Rückwärtsgangzahnrad mit relativ langer Übersetzung ständig mit der Eingangswelle verbunden ist.

Aufgabe der Erfindung ist es deshalb, bei einem Zahnradwechselgetriebe gemäß dem Oberbegriff des Anspruches 1 das Übersetzungsverhältnis der Rückwärtsgangzahnräder unabhängig von den Übersetzungsverhältnissen der Vorwärtsgänge festlegen zu können und/oder die aufwendige Lagerung des Losrades auf der Eingangswelle zu vermeiden und damit die Rasselneigung der Rückwärtsgangräder bei geschaltetem Vorwärtsgang zu reduzieren.

Gelöst wird diese Aufgabe mit den Merkmalen des Anspruchs 1.

Indem das zweite Rückwärtsganglosrad mit einem auf der Ausgangswelle drehfest, direkt neben dem Abtriebsritzel angeordneten Rückwärtsgangfestrad im Eingriff steht, kann durch Abstimmung dieser beiden Zahnräder ein beliebiges Übersetzungsverhältnis für den Rückwärtsgang hergestellt werden. Dies ist insbesondere bei modularen Getrieben sehr hilfreich, wenn das gleiche Grundgetriebe in verschiedenen Fahrzeugen und/oder verschiedenen Motorisierungen eingesetzt wird und so die Anpassung an die Rückwärtsgangübersetzung lediglich durch Austausch der beiden besagten Zahnräder erfolgen kann.

Durch die Anordnung des Rückwärtsgangfestrades neben dem Abtriebsritzel können Rückwärtsgangfestrad und Rückwärtsganglosrad mit relativ großen Durchmessern ausgeführt werden, wodurch die Baubreite der beiden Zahnräder sehr gering gehalten werden kann und damit die Baulänge des Getriebes durch das zusätzliche Rückwärtsgangfestrad nur wenig erhöht wird. Die Größe der Zahnraddurchmesser wird bei festgelegter Lage der Rückwärtsgangachse im wesentlichen begrenzt durch den Durchmesser der Getriebeeingangswelle. Da diese im Bereich der kupplungsseitigen Lagerung keine Verzahnung aufweist, ist dieser Durchmesser sehr gering und entsprechend groß ausführbar sind die Durchmesser der beiden Rückwärtsgangzahnräder.

Vorzugsweise kämmt dabei das erste Rückwärtsganglosrad mit einem Festrad auf der Eingangswelle, wodurch kein zusätzliches Festrad für den Rückwärtsgang auf der Eingangswelle benötigt wird.

In der bevorzugten Ausführung kämmt das erste Rückwärtsganglosrad mit dem auf der Eingangswelle angeordneten Festrad für den 1. Gang. Dadurch ist die Übersetzung des Rückwärtsganges in der gleichen Größenordnung wie die des 1. Ganges. Durch die mögliche Abstimmung des zweiten Rückwärtsganglosrades und des Rückwärtsgangfestrades läßt sich dann unabhängig von der Übersetzung des 1. Ganges die Rückwärtsgangübersetzung fein abgestuft auswählen. Dies ist vor allem vorteilhaft, wenn das gleiche Grundgetriebe in verschiedenen Fahrzeugen eingebaut wird, und dann über das Übersetzungsverhältnis der Rückwärtsgangzahnräder die unterschiedlichen Rückwärtsfahrtcharakteristiken abgestimmt werden können. Durch die kurze Übersetzung zwischen erstem Rückwärtsganglosrad und 1. Gang-Festrad auf der Eingangswelle dreht das erste Rückwärtsganglosrand relativ langsam gegenüber der Eingangswelle, wodurch die Rasselneigung des Getriebes insbesondere bei eingelegtem Vorwärtsgang vorteilhaft reduziert wird.

Bei einer weiteren Ausführung kämmt das erste Rückwärtsganglosrad mit einem auf der Eingangswelle angeordneten Festrad für den 2. Gang. Eine solche Anordnung ist sinnvoll, wenn eine relativ lange Rückwärtsgangübersetzung erforderlich ist. Da das vorgestellte Konzept die Kombination von jedem Festrad auf der Eingangswelle mit dem ersten Rückwärtsganglosrad erlaubt, sind insofern eine Vielzahl weiterer Übersetzungsverhältnisse realisierbar.

Aus Gründen der weiteren Geräuschminderung ist das erste Rückwärtsganglosrad bevorzugt lose drehbar auf dem zweiten Rückwärtsganglosrad angeordnet, welches wiederum drehbar auf der Rückwärtsgangachse angeordnet ist. Ebenfalls auf dem zweiten Rückwärtsganglosrad ist die Schaltkupplung zum Kuppeln, d.h. zum drehfesten Verbinden der beiden Rückwärtsganglosräder angeordnet. Dies erlaubt eine kompakte Ausführung und die Vormontage des gesamten Rückwärtsganglosradsatzes einschließlich Schaltkupplung. Bei der Getriebemontage wird dieser Rückwärtsganglosradsatz lediglich auf die im Getriebegehäuse fest verankerte Rückwärtsgangachse gesteckt.

Bei einer Ausführung entsprechend der vorhergehenden Anordnung ist das zweite Rückwärtsganglosrad lose drehbar auf dem ersten Rückwärtsganglosrad angeordnet. Diese Anordnung weist die gleiche Funktionalität und Vorteile wie die vorhergehende auf, lediglich die Funktionen der beiden Rückwärtsganglosräder werden vertauscht.

Die Erfindung wird anhand der Zeichnungen weiter erläutert. Es zeigen:
- Fig. 1: eine schematische Darstellung des Getriebes; und
- Fig. 2: die Seitenansicht der Zahnradsätze des Getriebes

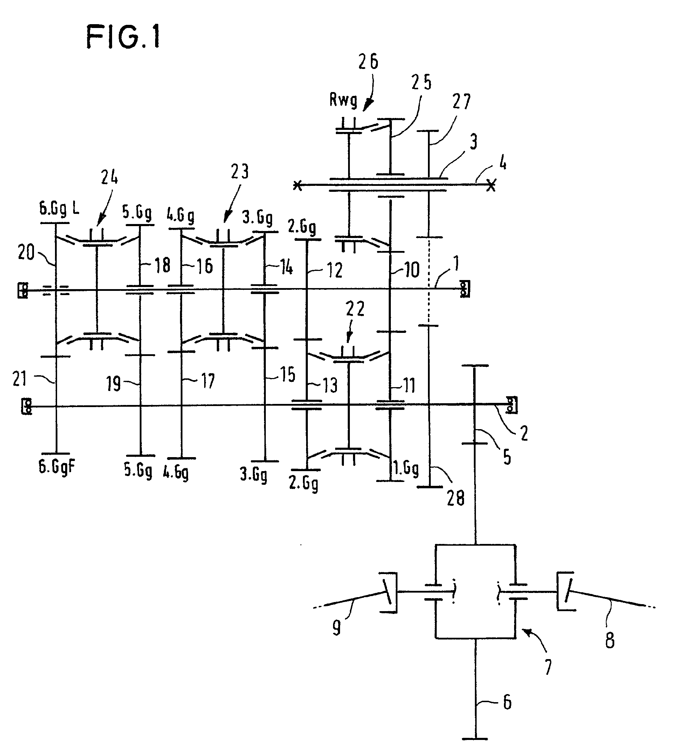

In Figur 1 bezeichnet 1 die Eingangswelle, 2 die Ausgangswelle und 3 die Rückwärtsgangwelle, wobei letztere drehbar auf der im nicht dargestellten Getriebegehäuse befestigten Rückwärtsgangachse 4 angeordnet ist. Über das fest mit der Ausgangswelle 2 verbundene Abtriebsritzel 5 steht die Ausgangswelle 2 mit dem Antriebszahnrad 6 des Differentialgetriebes 7 in getrieblicher Verbindung. Vom Differentialgetriebe 7 gehen die beiden Achswellen 8 und 9 ab.

Die Eingangswelle 1 weist das Festrad 10 für den 1. Gang, welches mit dem auf der Ausgangswelle 2 angeordneten Losrad 11 kämmt und das Festrad 12 für den 2. Gang, welches mit dem auf der Ausgangswelle 2 angeordneten Losrad 13 kämmt, auf. Weiterhin weist die Eingangswelle 1 das Losrad 14 für den 3. Gang, das mit dem Festrad 15 kämmt, das Losrad 16 für den 4. Gang, das mit dem Festrad 17 kämmt, das Losrad 18 für den 5. Gang, das mit dem Festrad 19 kämmt, und das Losrad 20 für den 6. Gang, das mit dem Festrad 21 kämmt, auf, wobei die Festräder 15, 17, 19 und 21 fest auf der Ausgangswelle 2 angeordnet sind. Über die Schaltkupplung 22 ist wahlweise das Losrad 11 oder das Losrad 13 mit der Ausgangswelle 2 kuppelbar, während die auf der Eingangswelle 1 angeordneten Losräder 14, 16, 18 und 20 über die Schaltkupplung 23 und 24 mit der Eingangswelle 1 kuppelbar sind.

Auf der Rückwärtsgangwelle 3 ist drehbar das erste Rückwärtsganglosrad 25 angeordnet, das mit dem Festrad 10 des 1. Ganges auf der Eingangswelle 1 kämmt und das mittels der Schaltkupplung 26 mit der Rückwärtsgangwelle 3 kuppelbar ist. Die Rückwärtsgangwelle 3 ist als Teil des zweiten Rückwärtsganglosrades 27 fest mit diesem verbunden. Direkt neben dem Antriebsritzel 5 ist auf der Ausgangswelle 2 das Rückwärtsgangfestrad 28 angeordnet, das mit dem zweiten Rückwärtsganglosrad 27 kämmt.

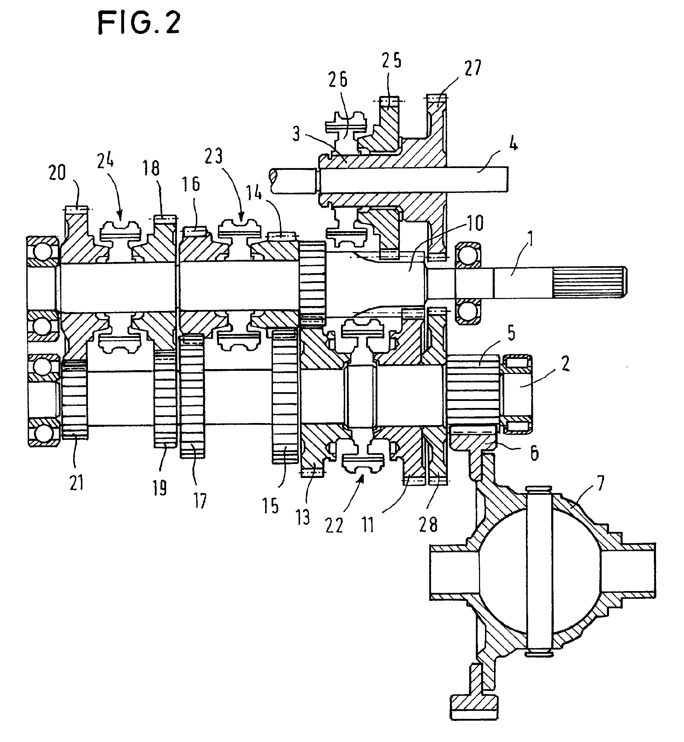

In Figur 2 ist diese Anordnung entsprechend der vorhergehenden Beschreibung von Figur 1 als Seitenansicht der Zahnradsätze gezeigt. Insbesondere die Ausgestaltung der Rückwärtsgangwelle 3 und des zweiten Rückwärtsganglosrades 27 aus einem Stück ist hier deutlich zu sehen. Weiterhin zeigt sich die vorteilhafte Anordnung von Schaltkupplung 26 und erstem Rückwärtsganglosrad 25 auf der Rückwärtsgangwelle 3, wodurch eine kompakte Baueinheit entsteht, die ideal als Untermontagegruppe hergestellt werden kann.

Selbstverständlich ist die erfindungsgemäße Anordnung der Rückwärtsgangzahnräder nicht auf das vorgestellte 6-Gang-Getriebe beschränkt, sondern kann in jedem Getriebe entsprechend dem Oberbegriff des Anspruches 1, unabhängig von der Anzahl der Gänge und der Anordnung der Synchronisiereinheiten, angewendet werden.

## Patentansprüche

1. Zahnradwechselgetriebe für Kraftfahrzeuge, mit einer Eingangswelle (1) und einer parallel dazu angeordneten Ausgangswelle (2), mit mehreren, auf beiden Wellen angeordneten Zahnradpaaren, bestehend aus jeweils einem Festrad und einem Losrad, die miteinander im Eingriff stehen und von denen das Festrad mit der zugeordneten Welle drehfest verbunden ist und das Losrad auf der zugeordneten Welle frei drehbar gelagert ist, wobei die Losräder mittels Schaltkupplungen mit den zugeordneten Wellen drehfest verbindbar sind, und wobei die Ausgangswelle (2) ein festes Abtriebsritzel (5) aufweist, das mit einem Antriebszahnrad (6) eines Differentialgetriebes (7) im Eingriff steht, und mit einer Rückwartsgangeinrichtung, die durch eine Zwischenradanordnung mit einer zur Ausgangswelle (2) und Eingangswelle (1) parallelen Rückwärtsgangachse (4) gebildet wird, auf der zwei Rückwärtsganglosräder (25, 27) lose drehbar angeordnet sind, wobei das erste Rückwärtsganglosrad (25) mit einem Zahnrad auf der Eingangswelle (1) und das zweite Rückwärtsganglosrad (27) mit einem Zahnrad auf der Ausgangswelle (2) kämmt, und wobei die beiden Rückwärtsganglosräder (25, 27) gegeneinander frei drehbar sind und durch eine Schaltkupplung (26) miteinander drehfest verbindbar sind,
**dadurch gekennzeichnet, daß**
das zweite Rückwärtsganglosrad (27) mit einem auf der Ausgangswelle (2) drehfest, direkt neben dem Abtriebsritzel (5) angeordneten Rückwärtsgangfestrad (28) im Eingriff steht.

2. Zahnradwechselgetriebe nach Anspruch 1,
**dadurch gekennzeichnet, daß**
das erste Rückwärtsganglosrad (25) mit einem Festrad auf der Eingangswelle (1) kämmt.

3. Zahnradwechselgetriebe nach Anspruch 2,
**dadurch gekennzeichnet, daß**
das erste Rückwärtsganglosrad (25) mit einem auf der Eingangswelle (1) angeordneten Festrad (10) für den 1. Gang kämmt.

4. Zahnradwechselgetriebe nach Anspruch 2,
**dadurch gekennzeichnet, daß**
das erste Rückwärtsganglosrad (25) mit einem auf der Eingangswelle (1) angeordneten Festrad (12) für den 2. Gang kämmt.

5. Zahnradwechselgetriebe nach Anspruch 1,
**dadurch gekennzeichnet, daß**
das erste Rückwärtsganglosrad (25) lose drehbar auf dem zweiten Rückwärtsganglosrad (27) angeordnet ist.

6. Zahnradwechselgetriebe nach Anspruch 1,
**dadurch gekennzeichnet, daß**
das zweite Rückwärtsganglosrad lose drehbar auf dem ersten Rückwärtsganglosrad angeordnet ist.
